# EUROPÄISCHE PATENTSCHRIFT

(11) **EP 1 799 541 B1**
(45) Veröffentlichungstag und Bekanntmachung des Hinweises auf die Patenterteilung: **05.05.2010**
(21) Anmeldenummer: 05784789.9
(22) Anmeldetag: 05.09.2005
(51) Int. Cl.: B63H 9/06, B63B 59/00

(54) **WASSERFAHRZEUG MIT EINEM DRACHENARTIGEN ELEMENT**
WATER CRAFT COMPRISING A KITE-TYPE ELEMENT
EMBARCATION A ELEMENT DE TYPE CERF-VOLANT

(30) Priorität: 06.09.2004 DE 102004013841
(43) Veröffentlichungstag der Anmeldung: 27.06.2007
(73) Patentinhaber: Skysails GmbH & Co. KG, 21079 Hamburg (DE)
(72) Erfinder: WRAGE, Stephan, 22767 Hamburg (DE)
(74) Vertreter: Niebuhr, Heinrich
(86) Internationale Anmeldenummer: PCT/EP2005/009530
(87) Internationale Veröffentlichungsnummer: WO 2006/027194

(56) Entgegenhaltungen:
- WO-A-03/097448
- DE-A1- 3 817 073
- FR-A- 2 781 195
- GB-A- 2 098 950
- GB-A- 2 098 952
- GB-A- 2 294 666

## Beschreibung

Die Erfindung betrifft ein Wasserfahrzeug mit einem drachenartigen Element, das mit einem Zugseil mit dem Wasserfahrzeug verbunden ist.

Bei einem vorbekannten Wasserfahrzeug (WO 01/192102 A1) kann vorgesehen sein, dass das drachenartige Element mit mehreren Zugseilen mit dem Wasserfahrzeug verbunden ist. Das drachenartige Element dient dabei dem Schiffsantrieb durch Wind, wobei dieser Antrieb ausschließlich durch Wind erfolgen kann oder aber der Antrieb durch Wind nur zur Unterstützung des maschinellen Antriebs dient, um so Treibstoff zu sparen oder die Geschwindigkeit zu erhöhen. Aufgrund der mehreren Zugseile kann das drachenartige Element gesteuert werden. Mehrere Zugseile haben aber den Nachteil, dass sie einzeln aufgewunden bzw. abgewickelt werden müssen, um das drachenartige Element einzuholen oder zu setzen. Auch könnten sich die mehreren Zugseile verheddern. Es ist daher aus der genannten Schrift auch ein Wasserfahrzeug mit einem drachenartigen Element der eingangs genannte Art bekannt, bei dem nur ein Zugseil vorgesehen ist, durch das die genannten Probleme vermieden werden.

Der Nachteil besteht aber darin, dass das drachenförmige Element nicht mehr ohne weiteres gesteuert werden kann.

Die Aufgabe der Erfindung besteht in der Schaffung eines Wasserfahrzeugs mit einem drachenartigen Element der eingangs genannten Art, bei dem das drachenartige Element gezielt gesteuert werden kann.

Das Dokument GB2098952, das als nächstliegender Stand der Technik angesehen wird, offenbart ein Drachensegelsystem, wobei die Energie entlang Drähten geführt wird. Die energieüberträgenden Drähte liegen frei von Zugseil, und können daher von einander und auch gegen das Zugseil beschädigt werden. Dieses Dokument offenbart die Merkmale der Präambel des Anspruchs 1.

Die erfindungsgemäße Lösung besteht darin, dass das drachenartige Element mit Verstelleinrichtungen versehen ist, die vom Wasserfahrzeug her mit Energie versorgt werden, die im oder am Zugseil übertragen wird.

Es sind also Verstelleinrichtungen vorgesehen, mit denen die Form der Segel des drachenartigen Elements, der Anstellwinkel, Öffnungsklappen, Reffvorgänge und dergleichen geändert oder bewirkt werden können. Die Steuerung kann dabei selbsttätig durch am drachenartigen Element vorgesehene Sensoren oder, was besonders vorteilhaft ist, per Funk vom Schiff her durchgeführt werden. Es bereitet dabei keine Probleme, die Signale zum drachenartigen Element zu senden. Es ist aber eine Energieversorgung für die Verstelleinrichtungen notwendig. Diese Energieversorgung erfolgt nun erfindungsgemäß vom Wasserfahrzeug her, und zwar im oder am Zugseil.

Am Zugseil ist ein das Wasserfahrzeug und das drachenartige Element verbinden des Energieübertragungselement befestigt. Bei einer vorteilhaften Ausführungsform ist das Zugseil als das Wasserfahrzeug und das drachenartige verbindendes zugfestes Energieübertragungselement ausgebildet.

Das Energieübertragungselement kann ein elektrisches Kabel sein. Das elektrische Kabel kann dabei insbesondere ein Kohlefaserkabel sein. So könnte auch das gesamte Zugseil aus Kohlefasern bestehen. In einem solchen Seil liegen die Seillitzen parallel zueinander und sind nur durch einen Mantel zusammengehalten. Hier kann bspw. eine elektrische Zweiteilung der Litzen erfolgen, so dass die eine Hälfte der Litzen gegen die andere Hälfte isoliert ist, so dass das Kohlefaserkabel zur Hin- und Zurückleitung des elektrischen Stroms dienen kann und kein extra Leiter vorgesehen sein muss. Dabei können die Litzen, die die Stromleitung besorgen, auch die Zugkraft wenigstens teilweise aufnehmen. Nach außen ist das Kabel durch den Mantel isoliert.

Ist das elektrische Kabel als Zugseil ausgebildet, so kann es mit entsprechenden Verstärkungsseilen oder Drähten versehen sein, damit es eine genügende Zugfestigkeit aufweist.

Durch dieses Energieübertragungselement kann dann elektrischer Strom vom Wasserfahrzeug zum drachenartigen Element übertragen werden, um dieses mit elektrischer Energie zu versorgen. Das elektrische Kabel kann aber auch dafür verwendet werden, Steuersignale vom Wasserfahrzeug zum drachenartigen Element zu übertragen. Diese Übertragung könnte aber auch z. B. per Funk erfolgen.

Bei einer anderen vorteilhaften Ausführungsform ist das Energieübertragungselement ein Schlauch. Durch dieses Energieübertragungselement kann dann ein Fluid zum drachenartigen Element übertragen werden, das dort auf entsprechende Betätigungselement wirkt.

Das Energieübertragungselement ist bei einer anderen vorteilhaften Ausführungsform ein Lichtleiter, insbesondere eine Glasfaser. Durch dieses Energieübertragungselement kann dann Licht übertragen werden, das in drachenartigen Element durch geeignete Wandler in elektrische Energie umgewandelt werden kann.

Sind Energieübertragungselement und Zugseil zu einem einzigen Element zusammengefasst, so erhält man einen geringeren aerodynamischen Widerstand. Die Handhabung auf der Winsch ist einfacher, als wenn mehrere separate längliche Elemente aufgewunden oder abgewickelt werden müssen. Man erhält auch ein geringeres Gewicht für Zugseil/Energieübertragungselement.

Der Nachteil ist, dass das Energieübertragungselement und das Seil ungefähr gleich dehnbar sein müssen, wobei dies über den Einsatztemperaturbereich der Fall sein muss. Im Falle der Verwendung eines Schlauches darf dieser nicht durch das Seil unter Last oder beim Aufwickeln auf der Winsch eingeklemmt werden.

Wenn es nicht möglich ist, das Energieübertragungselement so auszuwählen, dass es genau die gleiche Dehnbarkeit wie das Zugseil hat, so muss das Energieübertragungselement gleitbar gegenüber dem Zugseil angeordnet sein. Dies kann durch eine Gleitschicht geschehen, wenn das Energieübertragungselement im Zugseil angeordnet ist. Bei ungefähr gleicher Dehnbarkeit können Zugseil und Energieübertragungselement miteinander verklebt werden.

Im Falle der Verwendung eines Schlauches wird dieser zweckmäßigerweise unter Überdruck gehalten, da dann der Innendruck des Schlauches ein Einknicken oder Kneifen verhindert.

Bei einer anderen Ausführungsform sind Energieübertragungselement und Zugseil getrennt, aber miteinander verbunden, zweckmäßigerweise durch Klammern. Der Vorteil ist, dass Energieübertragungselement und Zugseil unterschiedliche Dehnbarkeiten haben können, wenn sich das Energieübertragungselement relativ zum Zugseil verschieben kann. Wenn nicht auf gleiche Dehnbarkeit Rücksicht genommen werden muss, ist eine bessere Materialoptimierung möglich. Auch die Wartung ist besser durchzuführen. Der Nachteil besteht darin, dass die Aerodynamik verschlechtert wird, die Handhabung auf der Winsch schwieriger wird und das Gewicht möglicherweise höher wird.

Alternativ zur erwähnten Befestigung mit Klammern, bei der die Klammern zweckmäßigerweise am Zugseil gegen Verrutschen gesichert sind, ist eine Befestigung z. B. durch Einspleißen, Klettband zwischen Zugseil und Energieübertragungselement, Banderole, feste Klipse oder Ummantelung (abriebfeste Hülle) möglich. Je größer der Spalt zwischen Energieübertragungselement und Zugseil ist, desto größer ist der aerodynamische Widerstand.

Wenn Zugseil und Energieübertragungselement getrennte Elemente sind, so ist es wichtig, dass sich die beiden Elemente gegeneinander in gewissen Grenzen verschieben können. Bei dieser Lösung ist es sehr vorteilhaft, wenn sich das Energieübertragungselement gegenüber dem Zugseil verschiebt und nicht umgekehrt.

Bei Verwendung von Zugseil und davon getrenntem Energieübertragungselement muss der Spillkopf eingepasst werden, so dass er zwei verschiedene Radien aufweist, so dass Zugseil und Energieübertragungselement parallel auf dem gleichen Spillkopf aufgerollt werden können. Bei dieser Lösung ist es wichtig, dass das Energieübertragungselement eine höhere Dehnbarkeit aufweist als das Zugseil, damit die Zuglast nicht durch das Energieübertragungselement ausgeübt werden muss.

Das gesamte System muss optimiert werden auf maximale Bruchlast/Arbeitslast, minimale Dehnung, minimaler Luftwiderstand, minimale Masse und maximale Energietransportleistung.

Es versteht sich, dass das Energieübertragungselement zur Energieübertragung mit dem Wasserfahrzeug und dem drachenartigen Element mit entsprechenden Übergangselementen verbunden sein muss.

Falls ein Schlauch verwendet wird, ist Pressluft, insbesondere getrocknete und/oder erwärmte Pressluft als Energieübertragungsfluid besonders vorteilhaft, da sonst Feuchtigkeit im Schlauch ausfrieren könnte, was nicht nur das Gewicht des Zugseils erhöhen würde, sondern auch die Gefahr mit sich bringt, dass der Schlauch sich zusetzt, so dass keine Pressluft mehr übertragen werden kann.

Bei einer anderen vorteilhaften Ausführungsform wird nicht Pressluft als Energieübertragungsfluid verwendet, sondern ein brennbares Gas, insbesondere Wasserstoff oder Methan. Es steht dann ein Brennstoff im drachenartigen Element zur Verfügung, mit dem ebenfalls ein Antrieb bewirkt werden kann. Methan könnte im drachenartigen Element bzw. einer daran befestigten Gondel eine Brennstoffzelle oder einen Verbrennungsmotor antreiben. Ein Fluid mit hoher Dichte, also insbesondere Flüssigkeiten, sind als Energieübertragungsmedium weniger geeignet, da die entsprechende Fluid- bzw. Flüssigkeitssäule im Schlauch sehr schwer sein würde.

Zweckmäßigerweise ist eine Winsch für das Zugseil und/oder das Energieübertragungselement am Wasserfahrzeug vorgesehen, die mit einer Leitfläche oder einem Leitblech vor dem Spillkopf zum Ausrichten des Zugseils und/oder des Energieübertragungselements versehen ist.

Zweckmäßigerweise sind zwei, drei oder noch mehr Spillköpfe mit einem Seilspeicher vorgesehen, wodurch erreicht werden kann, dass das Zugseil bzw. der Verbund von Zugseil/Energieübertragungselement nicht an der Spillkopfwand reibt. Bei Verwendung von zwei bis drei Spillköpfen, zwischen denen das Zugseil/Energieübertragungselement hin- und herläuft, kann trotzdem ein Umschlingungswinkel von mindestens 450° erreicht werden, was für die aufzunehmenden Zugbelastungen ausreichend ist.

Zweckmäßigerweise weist aus Sicherheitsgründen (z. B. bei Getriebebruch usw.) jeder Spillkopf eine eigene Notbremse auf, die zweckmäßigerweise als Bandbremse ausgeführt sein kann. Für die normale Bremsung kann eine justierbare Scheibenbremse vorgesehen sein. Hinter den Spillköpfen kann ein Seilspeicher angeordnet sein, der als Trommel ausgeführt ist. Dieser wird ebenfalls angetrieben und gebremst.

Im Falle von nebeneinander angeordnetem Zugseil und Energieübertragungselement wird zweckmäßigerweise ein zweigängiges Spillkopfprofil verwendet, damit Zugseil und Energieübertragungselement in getrennten, an ihren Querschnitt angepassten Rinnen aufgenommen werden können.

Die vorgenannten zweckmäßigen Ausführungsformen mit der Winsch mit einer Leitfläche und einem Leitblech, mit zwei, drei oder mehr Spillköpfen mit einem Seilspeicher, mit der Notbremse für jeden Spillkopf und einem zweigängigen Spillkopfprofil sind besonders vorteilhaft für den oben erwähnten Fall, dass das Zugseil auch ein Energieübertragungselement aufweist bzw. mit einem solchen verbunden ist. Diese besonderen Vorteile der Winsch bestehen aber auch in Fällen, in denen nur ein Zugseil ohne Energieübertragung vorgesehen ist. Der Schutz dieser Anmeldung soll daher ausdrücklich auch solche Fälle erfassen, in denen die Winsch wie angegeben ausgebildet ist, aber nur ein Zugseil ohne Energieübertragungselement.vorgesehen ist.

Die Energieversorgung des drachenartigen Elementes kann nicht nur zum Verstellen verwendet werden. Es kann vielmehr elektrische Energie übertragen oder aufgrund der anderen Energiezufuhr im drachenartigen Element erzeugt werden, um die Steuerung, Sensoren usw. mit Arbeitsspannung zu versehen. Für die Speicherung der elektrischen Energie ist zweckmäßigerweise ein Akku im drachenartigen Element bzw. der Gondel vorgesehen.

Insbesondere (aber nicht ausschließlich) in Fällen, wo ein elektrisches Kabel als Energieübertragungselement verwendet wird, besteht die Gefahr des Blitzschlags oder der Überspannung aufgrund elektrostatischer Wirkungen. Zweckmäßigerweise sind daher ein Blitzschutz und/oder eine Sicherung gegen elektrostatische Aufladung bzw. Entladung vorgesehen. Auch der Blitzschutz und/oder die Sicherung gegen die elektrostatische Aufladung bzw. Entladung ist aber nicht auf den Fall beschränkt, dass ein Energieübertragungselement vorgesehen ist. Der Schutz des Gebrauchsmusters soll ausdrücklich auch den Fall erfassen, dass solche Blitzschutzeinrichtungen und/oder Sicherungen gegen elektrostatische Aufladung bzw. Entladung in einem Fall vorgesehen sind, wo ein Zugseil ohne Energieübertragungselement verwendet wird.

Die Erfindung wird im Folgenden anhand von vorteilhaften Ausführungsformen unter Bezugnahme auf die beigefügten Zeichnungen beispielsweise beschrieben. Es zeigen in schematischer Darstellung:
- Fig. 1-3: Querschnitte durch drei verschiedene Zugseile mit integriertem Energieübertragungselement;
- Fig. 4: eine Winsch mit zwei Spillköpfen;
- Fig. 5-6: Profile von unterschiedlichen Spillköpfen;
- Fig. 7: eine Seilführung mit drei Spillköpfen und einem Seilspeicher;
- Fig. 8-10: Flansche mit Wirbeln, mit denen Zugseil/Energieübertragungselement am drachenartigen Element befestigt sind;
- Fig. 11: eine schematische Darstellung des Wasserfahrzeugs und des drachenartigen Elements;
- Fig. 12: eine Detaildarstellung des Überspannungsschutzes A in der Gondel; und
- Fig. 13: eine Detaildarstellung des Überspannungsschutzes B am Wasserfahrzeug.

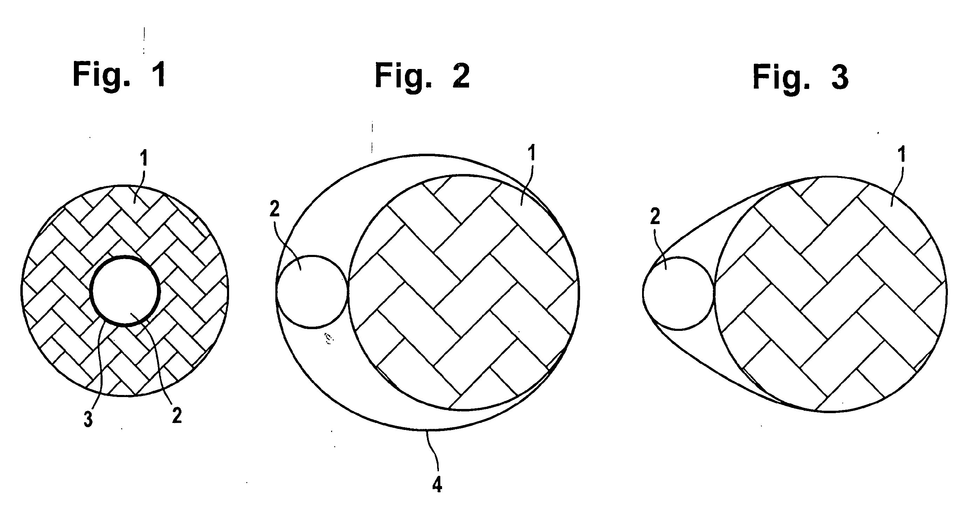

In Fig. 1 ist ein Zugseil 1 (bzw. die zugfeste Faserstruktur desselben) gezeigt, in dem ein Energieübertragungselement 2 mittig angeordnet ist, das mit einer Schicht 3 gegen den Hauptteil 1 des Zugseils abgegrenzt ist. Das Energieübertragungselement 2 kann ein Schlauch sein, wobei dann das Element 3 die Schlauchwandung ist. Das Element 2 kann aber auch ein Kabel sein, bei dem zwei halbkreisförmige Adern durch eine Isolierung voneinander getrennt sind und durch eine Isolierung 3 umgeben sind.

Bei der Ausführungsform der Fig. 2 und 3 sind der Hauptteil 1 des Zugseils und das Energieübertragungselement 2 durch gemeinsame Hüllen 4 umgeben.

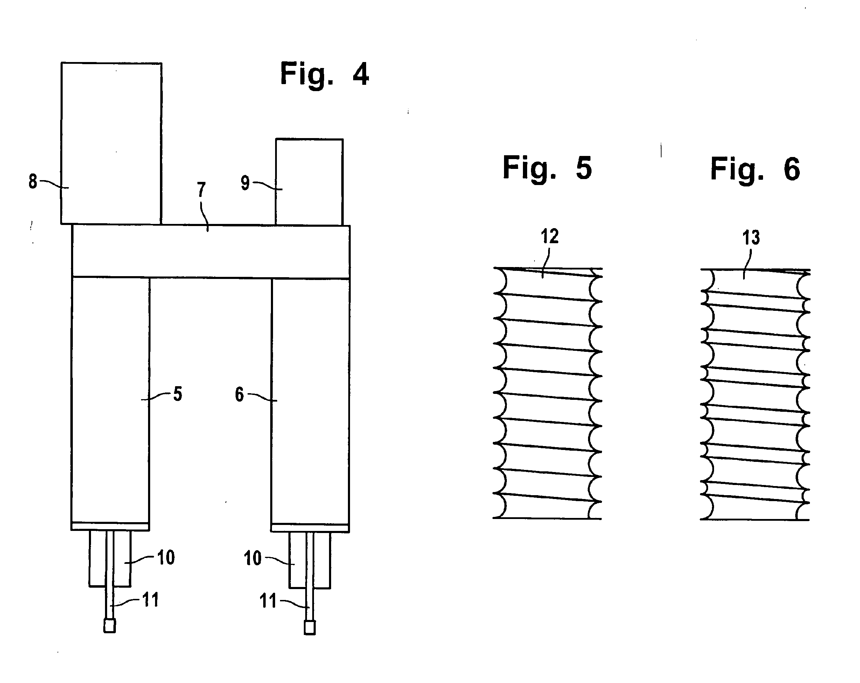

Fig. 4 zeigt eine Winsch mit zwei Spillköpfen 5, 6, die durch ein Getriebe 7 miteinander verbunden sind. Der Spillkopf 5 ist dabei mit einem Motor 8, der Spillkopf 6 ist mit einer Bremse 9 verbunden. Beide Spillköpfe 5, 6 weisen noch Notbremsen 10, insbesondere in Form einer Bandbremse auf. Mit 11 ist die Stromzufuhr bezeichnet.

Der Spillkopf 12 der Fig. 5 weist ein eingängiges Profil zum Aufnehmen von Zugseil/Energieübertragungselement auf, das integriert ausgebildet ist. Der Spillkopf 13 der Fig. 6 weist ein zweigängiges Profil auf, bei dem in einer der Profilrinnen das Zugseil und in der anderen Energieübertragungselement aufgenommen ist.

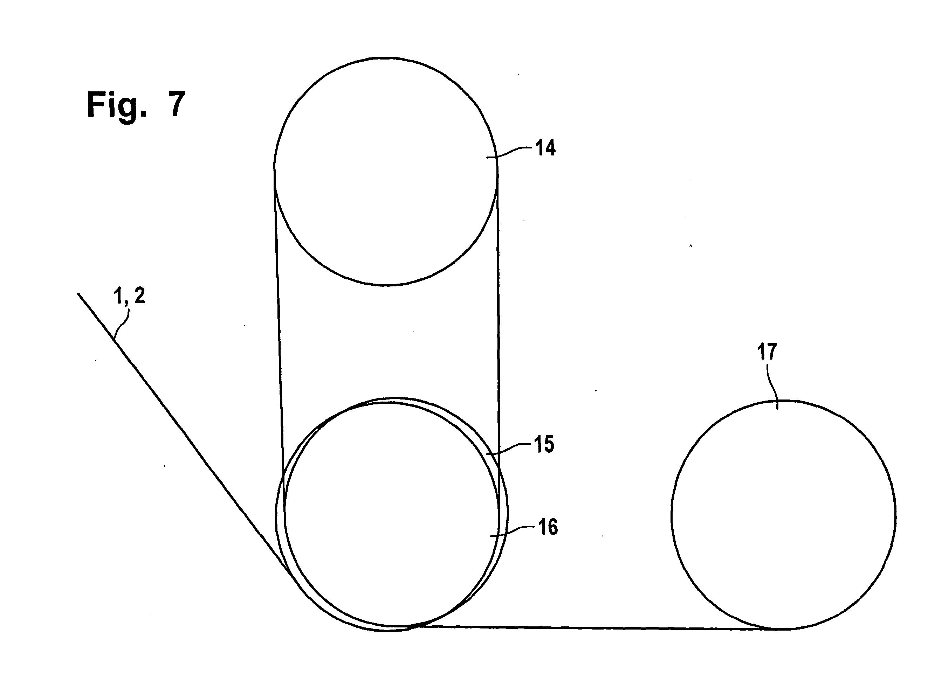

Fig. 7 zeigt eine Anordnung mit drei Spillköpfen 14, 15, 16 und einem Seilspeicher 17, mit denen Zugseil 1 und Energieübertragungselement 2 aufgewickelt und abgewickelt werden können.

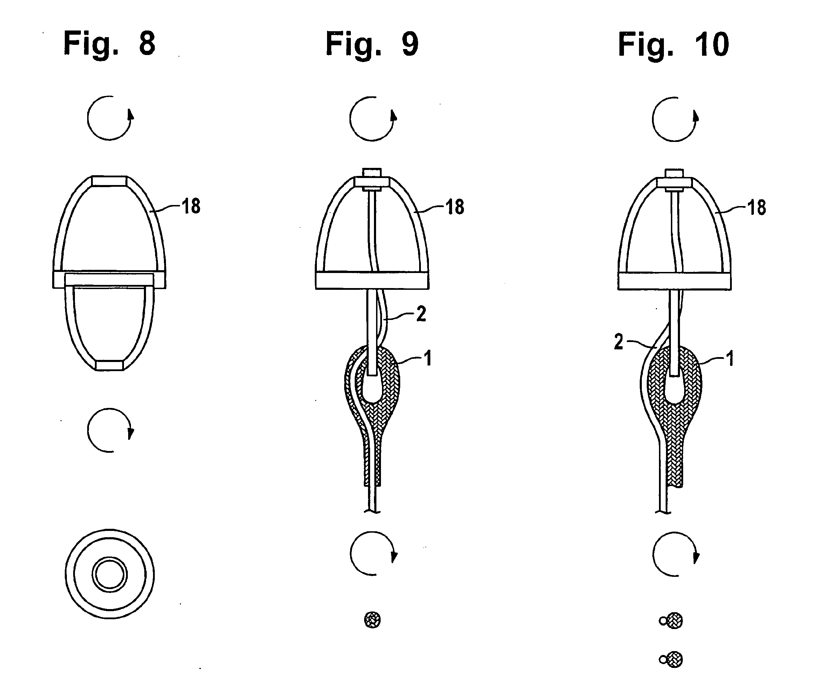

In den Fig. 8 bis 10 sind Wirbel 18 gezeigt, um verschiedene Möglichkeiten anzudeuten, wie Zugseil 1 und Energieübertragungselement 2 mit dem in den Figuren nicht gezeigten drachenartigen Element verbunden werden können.

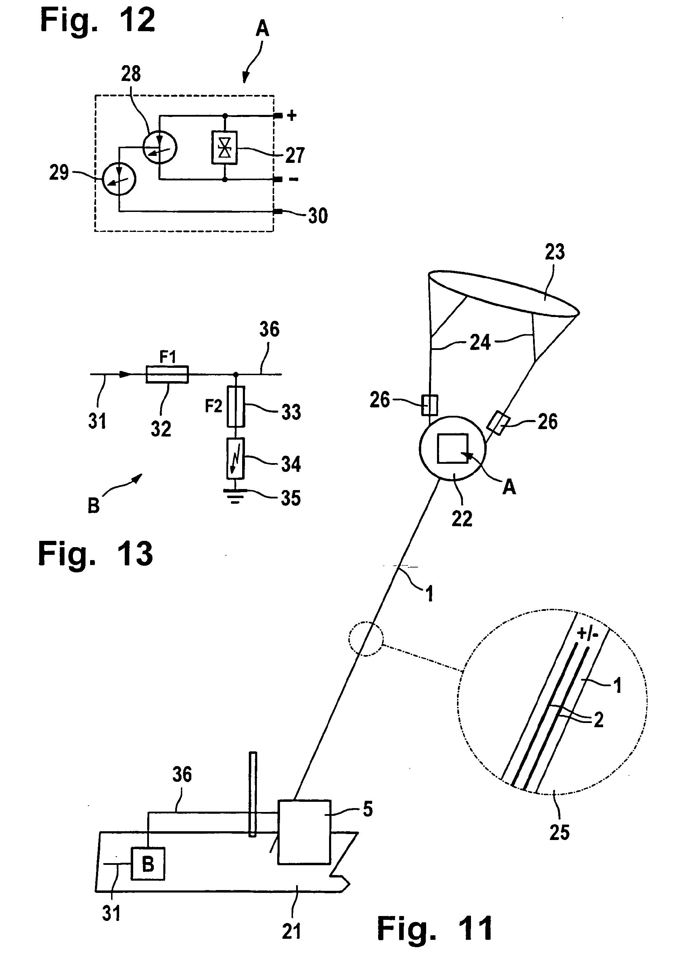

In Fig. 11 ist ein Wasserfahrzeug 21 schematisch dargestellt, das eine Winsch 5 aufweist, die ein Zugseil 1 hält. Dieses Zugseil ist mit der Steuergondel 22 eines drachenartigen Elementes 23 verbunden. Mit Hilfe dieser Steuergondel 22 können die Zugseile 24 des drachenartigen Elements 23 den Windverhältnissen und Manöverbedingungen angepasst werden. Im Kreis 25 ist eine vergrößerte Darstellung des Zugseils 1 mit den beiden Adern eines elektrischen Kabels (2) gezeigt. Die Steuergondel 22 ist mit Seilisolatoren 26 mit den Zugseilen 24 verbunden, um so einen Blitzschutz und Schutz gegen elektrostatische Entladung zu erhalten. Entsprechende Seilisolatoren könnten alternativ oder zusätzlich zwischen Steuergondel 22 und Zugseil 1 vorgesehen sein.

Der Blitz- oder Überspannungsschutz beschränkt sich aber nicht auf diese Seilisolatoren 26. Vielmehr ist noch die in Fig. 12 näher gezeigte elektrische Schaltung A in der Steuergondel 22 vorgesehen. Mit "+" und "-" sind die beiden Adern des Kabels 2 bezeichnet. Zwischen ihnen befindet sich ein spannungsabhängiger Widerstand 27, dessen Widerstand mit wachsender Spannung abnimmt. Mit 28 und 29 sind Ionenableiter bezeichnet. Ein Ionenableiter ist dabei ein Element, das bei den normalen Betriebsspannungen als Isolator wirkt und bei höheren Spannungen diese ableitet bzw. kurzschließt. Der Ionenableiter kann dabei ähnlich wie ein Kondensator als Röhre mit einer Mittelelektrode und einer Wandelektrode oder als flächiges Kondensatorelement mit zwei Platten ausgebildet sein. Die beiden Elektroden oder Platten sind dabei in einem kleinen Abstand angeordnet, der ausreicht, dass das Element bei den normalen Betriebsspannungen als Isolator wirkt. Bei höheren Betriebsspannungen fließt dann ein Strom zwischen den beiden Elektroden bzw. Platten und leitet dadurch die Überspannung ab. Je höher die Spannung und wie erwähnt desto geringer der Widerstand des Widerstands 27 ist, um so mehr Strom kann über die Ionenableiter 28, 29 abgeleitet werden, ohne die eingebaute Elektronik zu gefährden. Mit 30 ist noch die Ableitung der Überspannung (Restspannung von Ionenableiter gegen Masse) dargestellt.

Die Schaltung B ist im Wasserfahrzeug angeordnet. 31 ist dabei die Versorgungsleitung vom Schiffsgenerator, 32 ist eine Sicherung im Versorgungskreis der Seilwände 5. 33 ist eine Sicherung für den Überspannungsschutz 34. 35 ist die Erdung, d. h. der Schiffskörper bzw. das Wasser, und 36 ist die Versorgungsleitung zur Winsch 5.

## Patentansprüche

1. Wasserfahrzeug mit einem drachenartigen Element, das mit einem Zugseil (1) mit dem Wasserfahrzeug verbunden ist und das mit Verstelleinrichtungen versehen ist, die vom Wasserfahrzeug (21) her mit Energie versorgt werden, die im oder am Zugseil (1) übertragen wird, wobei am Zugseil (1) ein das Wasserfahrzeug (21) und das drachenartige Element (23) verbindendes Energieübertragungselement (2) befestigt ist**, dadurch gekennzeichnet, dass** das Energieübertragungselement (2) in einem sich über die Länge des Zugseils (1) erstreckenden Hohlraum angeordnet ist.

2. Wasserfahrzeug nach Anspruch 1, **dadurch gekennzeichnet, dass** das Zugseil (1) als das Wasserfahrzeug (21) und das drachenartige Element (23) verbindendes zugfestes Energieübertragungselement (2) ausgebildet ist.

3. Wasserfahrzeug nach Anspruch 1 oder 2, **dadurch gekennzeichnet, dass** das Energieübertragungselement (2) ein elektrisches Kabel, insbesondere ein Kohlefaserkabel ist.

4. Wasserfahrzeug nach Anspruch 1 oder 2, **dadurch gekennzeichnet, dass** das Energieübertragungselement (2) ein Schlauch ist.

5. Wasserfahrzeug nach Anspruchs 1 oder 2,**dadurch gekennzeichnet, dass** das Energieübertragungselement (2) ein Lichtleiter, insbesondere eine Glasfaser ist.

6. Wasserfahrzeug nach Anspruch 1, **dadurch gekennzeichnet, dass** das Energieübertragungselement (2) gleitend und verschiebbar im Hohlraum angeordnet ist.

7. Wasserfahrzeug nach Anspruch 1, **dadurch gekennzeichnet, dass** das Energieübertragungselement (2) mit dem Zugseil (1) verklebt ist.

8. Wasserfahrzeug nach Anspruch 4, **dadurch gekennzeichnet, dass** Pressluft, insbesondere getrocknete und/oder erwärmte Pressluft dem drachenartigen Element (23) zugeführt wird.

9. Wasserfahrzeug nach Anspruch 4, **dadurch gekennzeichnet, dass** ein brennbares Gas, insbesondere Wasserstoff oder Methan dem drachenartigen Element zugeführt wird.

10. Wasserfahrzeug nach Anspruch 3, **dadurch gekennzeichnet, dass** das Kabel auch zur Signalübertragung verwendet wird.

11. Wasserfahrzeug nach einem der Ansprüche 1 bis 10, **dadurch gekennzeichnet, dass** es eine Winsch (5, 6, 12 - 16) für das Zugseil (1) und/oder das Energieübertragungselement (2) aufweist, die mit einer Leitfläche oder einem Leitblech vor dem Spillkopf zum Ausrichten des Zugseils (1) und/oder des Energieübertragungselements (2) versehen ist.

12. Wasserfahrzeug nach Anspruch 11, **dadurch gekennzeichnet, dass** mehrere Spillköpfe (14-16) mit einem Seilspeicher (17) vorgesehen sind.

13. Wasserfahrzeug nach Anspruch 12, **dadurch gekennzeichnet, dass** jeder Spillkopf (5, 6) mit einer eigenen Notbremse (10) versehen ist.

14. Wasserfahrzeug nach einem der Ansprüche 1 bis 13, **dadurch gekennzeichnet, dass** es mit einem Blitzschutz und/oder einer Sicherung gegen elektrostatische Aufladung bzw. Entladung vorgesehen ist.

## Claims

1. Watercraft with the kite-like element which is connected with the watercraft by a hawser (1) and which is provided with adjusting devices, which from the watercraft (21) are supplied with energy which is transmitted in or at the hawser (1), whereby at the hawser (1) an energy transmitting element (2) is fastened which connects the watercraft (21) and the kite-like element (23), **characterized in that** the energy transmitting element (2) is arranged in a cavity extending along the length of the hawser (1).

2. Watercraft according to claim 1, **characterized in that** the hawser is formed as a energy transmitting element (2) with tensile strength which connects the watercraft (21) and the kite-like element (23).

3. Watercraft according to claim 1 or 2, **characterized in that** the energy transmitting element (2) is an electrical cable, particularly a carbon fiber cable.

4. Watercraft according to claim 1 or 2, **characterized in that** the energy transmitting element (2) is a hose.

5. Watercraft according to claim 1 or 2, **characterized in that** the energy transmitting element (2) is a light guide, particularly a glass fiber.

6. Watercraft according to claim 1, **characterized in that** the energy transmitting element (2) arranged in sliding and displaceable manner in the cavity.

7. Watercraft according to claim 1, **characterized in that** the energy transmitting element (2) is glued to the hawser (1).

8. Watercraft according to claim 4, **characterized in that** compressed air, particularly dried and/or heated compressed air is supplied to the kite-like element (23).

9. Watercraft according to claim 4, **characterized in that** a combustible gas, particularly hydrogen or methane is supplied to the kite-like element.

10. Watercraft according to claim 3, **characterized in that** the cable is also used for transmitting signals.

11. Watercraft according to any of claims 1 to 10, **characterized in that** it comprises a winch (5, 6, 12-16) for the hawser (1) and/or the energy transmitting element (2), which is provided with a guiding surface or a guiding sheet in front of the capstan head for aligning the hawser (1) and/or the energy transmitting element (2).

12. Watercraft according to claim 11, **characterized in that** a plurality of capstan heads (14-16) with a rope storage device (17) are provided.

13. Watercraft according to claim 12, **characterized in that** each capstan head (5, 6) is provided with its own emergency brake (10).

14. Watercraft according to any of claims 1-13, **characterized in that** it is provided with a lightning protection and/or with a safeguard against electrostatic charging or discharging, respectively.

## Revendications

1. Véhicule nautique, comportant un élément de type cerf-volant, qui est relié au véhicule nautique par un câble de traction (1) et qui est muni de dispositifs de réglage qui sont alimentés en énergie par le véhicule nautique (21), l'énergie étant transportée dans ou sur le câble de traction (1), sachant qu'un élément de transmission d'énergie (2), reliant le véhicule nautique (21) et l'élément de type cerf-volant (23), est fixé contre le câble de traction (1), **caractérisé en ce que** l'élément de transmission d'énergie (2) est disposé dans une cavité qui s'étend sur toute la longueur du câble de traction (1).

2. Véhicule nautique selon la revendication 1, **caractérisé en ce que** le câble de traction (1) est réalisé sous la forme d'un élément de transmission d'énergie (2), résistant à la traction et reliant le véhicule nautique (21) et l'élément de type cerf-volant (23).

3. Véhicule nautique selon la revendication 1 ou 2, **caractérisé en ce que** l'élément de transmission d'énergie (2) est un câble électrique, en particulier un câble de fibres de carbone.

4. Véhicule nautique selon la revendication 1 ou 2, **caractérisé en ce que** l'élément de transmission d'énergie (2) est un tuyau flexible.

5. Véhicule nautique selon la revendication 1 ou 2, **caractérisé en ce que** l'élément de transmission d'énergie (2) est une fibre optique, en particulier une fibre de verre.

6. Véhicule nautique selon la revendication 1, **caractérisé en ce que** l'élément de transmission d'énergie (2) est disposé de manière à pouvoir glisser ou coulisser dans la cavité.

7. Véhicule nautique selon la revendication 1, **caractérisé en ce que** l'élément de transmission d'énergie (2) est collé au câble de traction (1).

8. Véhicule nautique selon la revendication 4, **caractérisé en ce que** de l'air comprimé, en particulier de l'air comprimé séché et/ou chauffé est acheminé vers l'élément de type cerf-volant (23).

9. Véhicule nautique selon la revendication 4, **caractérisé en ce qu'**un gaz combustible, en particulier de l'hydrogène ou du méthane, est acheminé vers l'élément de type cerf-volant.

10. Véhicule nautique selon la revendication 3, **caractérisé en ce que** le câble est également utilisé pour la transmission des signaux.

11. Véhicule nautique selon l'une quelconque des revendications 1 à 10, **caractérisé en ce qu'**il comporte un treuil (5, 6, 12 - 16) pour le câble de traction (1) et/ou l'élément de transmission d'énergie (2), lequel est muni d'une surface conductrice ou d'une tôle conductrice devant la poupée de treuil pour l'orientation du câble de traction (1) et/ou de l'élément de transmission d'énergie (2).

12. Véhicule nautique selon la revendication 11, **caractérisé en ce qu'**il est prévu plusieurs poupées de treuil (14-16) avec une réserve de câble (17).

13. Véhicule nautique selon la revendication 12, **caractérisé en ce que** chaque poupée de treuil (5, 6) est munie de son propre frein de secours (10).

14. Véhicule nautique selon l'une quelconque des revendications 1 à 13, **caractérisé en ce que** celui-ci est prévu avec une protection anti-foudre et/ou une protection contre une charge ou décharge électrostatique.
